# EUROPÄISCHE PATENTANMELDUNG

(11) **EP 1 233 327 A2**
(43) Veröffentlichungstag der Anmeldung: **21.08.2002**
(21) Anmeldenummer: 02003328.8
(22) Anmeldetag: 13.02.2002
(51) Int. Cl.: G06F 1/18

(54) **Vorrichtung zur Reduzierung der Störstrahlung**

(30) Priorität: 19.02.2001 DE 10107690
(71) Anmelder: Fujitsu Siemens Computers GmbH, 81739 München (DE)
(72) Erfinder: Busch, Peter, 86179 Augsburg (DE)
(74) Vertreter: Epping Hermann & Fischer

(57) **Zusammenfassung**

Die Erfindung betrifft eine Vorrichtung zur Reduzierung der Störstrahlung an einer Netzbuchse (1, 2) im Gehäuse (10) eines Computers oder ähnlichen elektrischen Gerätes. Zum einen befindet sich meist neben der Netzbuchse (1, 2) ein Bereichsumschalter (6) (115 V/230 V). Erfindungsgemäß wird ein Blech (7) über den Bereichsumschalter (6) mit dem Gehäuse verschraubt oder vernietet, wobei das Blech (7) so ausgebildet ist, daß es den Schutzleiter (3) der Netzbuchse kontaktiert.

Meistens sind zwei Netzbuchsen (1, 2) nebeneinander in dem Gehäuse (10) angeordnet, so daß erfindungsgemäß ein Blech (7) zwischen den beiden Netzbuchsen angeordnet ist, welches die Schutzleiter der beiden Netzbuchsen kontaktiert.

Da der Bereichsumschalter meist zwischen den beiden Netzbuchsen angeordnet ist, kann auch hier die Festlegung über den Bereichsumschalter (6) erfolgen.

## Beschreibung

Die Erfindung betrifft eine Vorrichtung zur Reduzierung der Störstrahlung an benachbarten Netzbuchsen im Gehäuse eines Computers oder ähnlichen elektrischen Gerätes bzw. einer Netzbuchse mit daneben angeordnetem Bereichsumschalter im Gehäuse eines Computers oder ähnlichen elektrischen Gerätes.

Netzteile von Computer oder ähnlichen elektrischen Geräten haben zum Anschluß ans Netz meist Netzeingangsbuchsen zur Netzversorgung über Kabel mit Kaltgerätesteckern. Um weitere Verbraucher, z. B. Monitore, anschließen zu können, befindet sich direkt daneben meist noch eine weitere Netzausgangsbuchse.

Um die gesetzlichen Vorschriften bzgl. der Störstrahlung dieser Netzteile einzuhalten, genügte es früher, die Störungen des Netzteiles und des angeschlossenen PC-Verbrauchers durch Filterbauteile auf der Netzteilplatine zu reduzieren.

Dabei wurden auch Y-Kondensatoren eingesetzt, die die Störungen von Nulleiter und Phase auf das Gehäuse ableiten, das mit dem Schutzleiter über die Netzeingangsbuchse verbunden ist.

Da aber die Störfrequenzen wegen der höheren Taktfrequenzen von CPU und anderen Verbrauchern immer höher werden, muß die Anbindung dieser Y-Kondensatoren an den Schutzleiter mit noch niedrigerer Impedanz als bisher erfolgen.

Die Entstörung von Frequenzen oberhalb von ca. 200 Mhz erfolgt deshalb inzwischen mit Y-Kondensatoren, die direkt auf die Netzeingangs- bzw. Netzausgangsbuchse gelötet werden.

Doch selbst diese Maßnahme ist bei Frequenzen im Bereich von 300 bis 600 Mhz nicht mehr ausreichend, da die Impedanz der Leitung zwischen Schutzleiteranschluß der Netzbuchse und dem Gehäuse der Stromversorgung zu hoch ist.

Viele Hersteller von Stromversorgungen haben bisher auf dieses Problem noch nicht reagiert. Andere entgegnen diesem Problem durch den Einsatz von teuren abgeschirmten Netzbuchsen mit eingebautem Filter.

Die Firma Delta Electronics hat zur Beseitigung dieses Problems einen Kragen aus Metall entwickelt, der von hinten auf die Netzbuchse aufgesteckt wird und über die beiden Befestigungsschrauben der Netzbuchse mit dem Gehäuse verbunden ist. Der Metallkragen ist an der Seite des Schutzleiterkontaktes der Netzbuchse verlängert und dort an den Schutzleiter angelötet. Diese Lösung hat den Vorteil einer niedrigen Impedanz zwischen Gehäuseblech und Schutzleiter, wodurch Y-Kondensatoren am Schutzleiter noch bei höheren Frequenzen leiten können.

Nachteil dieser Lösung ist, daß diese nur bei geschraubten Netzbuchsen einsetzbar ist. Ist die Netzbuchse dagegen eingeschnappt, ist diese Maßnahme nicht durchführbar. Auch muß der Schutzleiterkontakt jeweils über einen Schutzleiterdraht mit dem Gehäuse verbunden werden. Dies ist erforderlich, da die Netzbuchse von außen abgeschraubt werden kann und vorgeschrieben ist, daß der Schutzleiterkontakt von außen unlösbar mit dem Gehäuse verbunden ist. Ein weiterer Nachteil der Erfindung ist, daß meist zwei Netzbuchsen, eine Netzeingangsbuchse und eine Netzausgangsbuchse nebeneinander angeordnet sind und der Metallkragen für jede Netzbuchse vorgesehen werden muß.

Der Erfindung liegt daher die Aufgabe zugrunde, eine Lösung zur Reduzierung der Störstrahlung an Netzbuchsen aufzuzeigen, welche kostengünstiger und zum anderen auch bei nicht geschraubten, sondern lediglich in das Gehäuse eingeschnappten Netzbuchsen anwendbar ist.

Bei benachbarten Netzbuchsen wird diese Aufgabe dadurch gelöst, daß zwischen den Netzbuchsen ein Blech mit dem Gehäuse verbunden ist, welches die Schutzleiter der beiden Netzbuchsen kontaktiert. Somit ist über ein einziges Blech gewährleistet, daß beide Netzbuchsen gegen Störstrahlung abgeschirmt sind.

Bei Netzbuchsen, neben denen sich ein Bereichsumschalter (115 V, 230 V) befindet, wird die Aufgabe alternativ dadurch gelöst, daß das Blech mit dem Bereichsumschalter an das Gehäuse geschraubt oder genietet ist.

Damit die Hochfrequenzimpedanz niedrig bleibt, ist es vorteilhaft, daß das Blech möglichst breit neben der Netzbuchse ausgeführt ist und sich erst kurz vor dem Schutzleiterkontakt verjüngt. Die Verjüngung ist maximal so zu wählen, daß der erforderliche Mindestabstand zu den Nachbarkontakten gerade noch eingehalten wird.

Natürlich ist es auch möglich, bei benachbarten Netzbuchsen mit einem dazwischengelegenen Bereichsumschalter das Blech mit dem Bereichsumschalter zu verschrauben. Vorteilhafterweise weist das Blech bei dieser Ausführungsform in der Mitte für den Knebel einen Ausschnitt auf und ist seitlich des Bereichsumschalters hochgebogen und zum Kontaktieren der Schutzleiterkontakte wiederum seitlich nach außen abgebogen.

Zur Schutzleiterkontaktierung ist es möglich, daß das Blech lediglich federnd beaufschlagt gegen die Schutzleiterstifte gepresst ist. Ein besserer und zuverlässigerer Kontakt ist jedoch durch ein Verlöten des Bleches mit den Schutzleiterkontakten zu erzielen.

In der Regel sind die Netzbuchsen so aufgebaut, daß für jeden Kontakt ein Stift vorgesehen ist, wobei der Stift für die Phase und den Nulleiter übereinander angeordnet sind und der Stift für den Schutzleiter hierzu mittig seitlich versetzt angeordnet ist.

Gemäß einer vorteilhaften Ausführungsform der Erfindung sind die benachbarten Netzbuchsen jeweils so angeordnet, daß die Schutzleiterstifte jeweils zur Mitte hin versetzt sind.

Diese Ausführungsform hat den Vorteil, daß das Blech zur Kontaktierung des Schutzleiterstiftes nicht zwischen den Stiften für die Phase und den Nulleiter durchgeführt werden muß.

Eine weitere vorteilhafte Ausführungsform sieht vor, daß das Blech zur Kontaktierung der Schutzleiterstifte eine Öffnung aufweist, die an die Geometrie der Schutzleiterstifte angepaßt ist und somit von oben über die Schutzleiterstifte gesteckt werden kann und diese umschließt.

Wird das Blech noch, wie oben angedeutet, mit den Schutzleiterstiften verlötet, entsteht eine sichere Verbindung zwischen den Schutzleiterstiften.

Ist das Blech von außen lösbar über den Bereichsumschalter mit dem Gehäuse verbunden, so wird vorteilhafterweise nur ein Schutzleiterstift über einen Schutzleiterdraht von außen nicht lösbar mit dem Gehäuse kontaktiert, da die Schutzleiterstifte untereinander schon über das Blech sicher verbunden sind.

Eine alternative vorteilhafte Ausführungsform hierzu sieht vor, daß das Blech so erweitert ist, daß es auf der einen Seite von innen an eine Nietmutter im Gehäuse angeschraubt werden kann.

Nachfolgend wird die Erfindung anhand in den Zeichnungen dargestellter Ausführungsbeispiele näher erläutert.

In den Zeichnungen zeigen
- Figur 1: zwei benachbarte Netzbuchsen auf der Innenseite eines Computers in der Ansicht von oben,
- Figur 2: die Ansicht gemäß Figur 1 in Seitenansicht,
- Figur 3: die Ansicht gemäß Figur 1 in einer alternativen Ausführungsform,
- Figur 4: die Ansicht gemäß Figur 3 von der Seite,
- Figur 5: die Ansicht gemäß Figur 1 mit einer Kontaktierung über einen Schutzleiterdraht und
- Figur 6: ebenfalls die Ansicht gemäß Figur 1 mit einer Kontaktierung über eine Verschraubung.

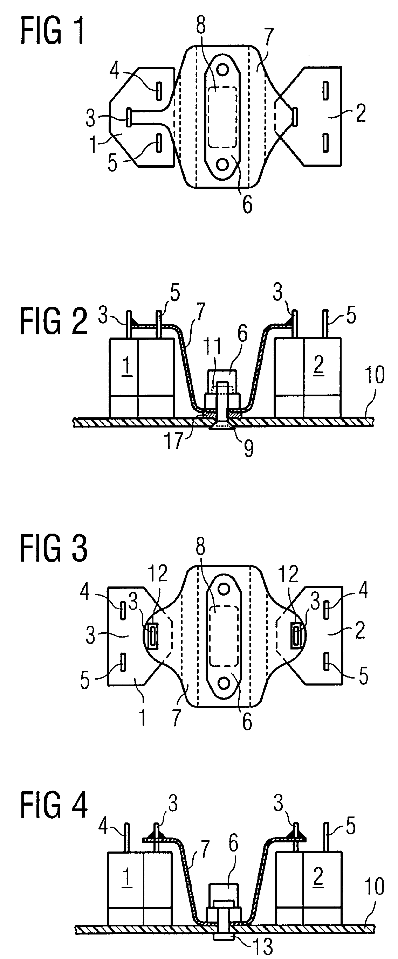

Figur 1 zeigt schematisch zwei benachbarte Netzbuchsen 1 und 2 an der Innenseite eines Computers oder ähnlichen elektrischen Gerätes.

Eine Netzbuchse dient in der Regel zur Stromversorgung des Computers und stellt somit die Netzeingangsbuchse dar und die andere dient zum Anschluß für externe Geräte wie z. B. einen Monitor und stellt somit die Netzausgangsbuchse dar.

Die Netzbuchsen 1 bzw. 2 weisen jeweils 3 Kontaktstife 3 bis 5 auf, wobei die Kontaktstifte 4 und 5 für die Phase und den Nulleiter übereinander angeordnet sind und der Kontaktstift 3 für den Schutzleiter jeweils mittig seitlich versetzt angeordnet ist.

Zwischen den Netzbuchsen 1 und 2 ist ein Bereichsumschalter 6 angeordnet, welcher dazu dient, den Netzeingangsbereich zwischen 115 V und 230 V umschalten zu können. Der Bereichsumschalter 6 ist in der Regel mit dem Gehäuse verschraubt oder vernietet.

Zur Reduzierung der Störstrahlung ist zwischen den beiden Netzbuchsen 1 und 2 ein Blech 7 vorgesehen, welches über den Bereitsumschalter 6 mit dem Gehäuse des Computers oder des elektrischen Gerätes verschraubt oder vernietet ist.

Das Blech 7 ist möglichst breit ausgebildet und weist somit eine größere Breite wie die Netzbuchsen 1 und 2 auf.

Seitlich des Bereichsumschalters 6 ist das Blech 7 aufgebogen und in Höhe der Kontaktstifte 3 bis 5 wieder zu den Schutzleiterkontaktstiften 3 seitlich abgebogen und gemäß dem in Figur 1 dargestellten Ausführungsbeispiel mit den Schutzleiterstiften 3 verlötet.

Im Blech 7 ist im Bereich des Umschalters 6 für den Knebel des Umschalters 6 eine Öffnung 8 vorgesehen.

In Figur 2 ist dargestellt, wie über eine Schraube 9 das Blech 7 sowie der Bereichsumschalter 6 mit dem Gehäuse 10 verbunden sind. Günstig ist es die Verschraubung von innen nach außen vorzunehmen (siehe gestrichelt eingezeichnete Schraube 11), da hierdurch eine zusätzliche von außen unlösbare Kontaktierung entfallen kann.

Um eine sichere Kontaktierung zwischen dem Blech 7 und Gehäuse 10 zu gewährleisten ist zwischen dem Blech 7 und dem Gehäuse 10 eine Zahnscheibe 17 pro Verschraubung angeordnet.

Beim Ausführungsbeispiel gemäß Figur 1 und 2 muß bei der Netzbuchse 1 das Blech zwischen den Kontaktstiften 4 und 5 zum Schutzleiterstift 3 hindurchgeführt werden. Um die Hochfrequenzimpedanz jedoch niedrig zu halten, ist es wichtig, daß das Blech 7 möglichst breit ausgebildet wird. Das Blech 7 wird zur Durchführung des Schutzleiterkontaktstiftes 3 zwischen den Kontaktstiften 4 und 5 nur soweit verjüngt, daß der Mindestabstand zu den Kontaktstiften 4 und 5 eingehalten wird.

Eine vorteilhafte Ausgestaltung zeigt Figur 3 und 4, bei welcher die Netzbuchsen 1 und 2 so angeordnet sind, daß beide Schutzleiterkontaktstifte 3 zur Mitte hin zeigend angeordnet sind.

Wie in Figur 3 dargestellt, muß somit das Blech 7 nicht zwischen den Kontaktstiften 4 und 5 zur Kontaktierung des Schutzleiterkontaktstiftes 3 hindurch geführt werden, sondern kann diesen direkt kontaktieren.

Das Blech 7 ist gemäß dieser Ausführungsform jeweils mit einer Öffnung 12 in der Geometrie der Schutzleiterkontaktstifte 3 versehen, so daß es von oben über die Schutzleiterkontaktstifte 3 aufgesteckt werden kann.

Figur 4 zeigt die Seitenansicht von Figur 3, in der dargestellt ist, wie das Blech 7 die Schutzleiterkontaktstifte 3 umschließt. Das Blech 7 ist wiederum mit den Schutzleiterkontaktstiften 3 verlötet.

Gemäß diesem Ausführungsbeispiel ist das Blech 7 sowie der Bereichsumschalter 6 über eine Nietverbindung 13 mit dem Gehäuse 10 verbunden. Auch hier kann zur besseren Kontaktierung eine Zahnscheibe 17 zwischen Gehäuse 10 und Blech 7 (wie in Figur 2 dargestellt) pro Nietverbindung 13 angeordnet sein.

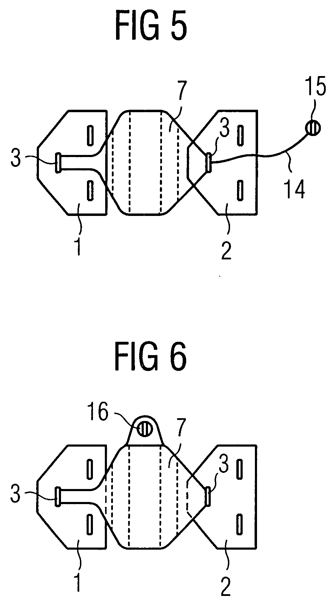

Ist eine sichere und von außen nicht lösbare Verbindung des Bleches 7 über den Bereichsumschalter mit dem Gehäuse nicht möglich, so kann diese alternativ wie in Figur 5 dargestellt, über einen Schutzleiterdraht 14 und eine von außen nicht zugängliche Schraube 15 oder wie in Figur 6 dargestellt, über eine Zusatzlasche 16 am Blech 7 und einer Schraube, welche in eine Nietmutter eingeschraubt werden kann, erzeugt werden.

Die Erfindung ist nicht auf die dargestellten Ausführungsbeispiele beschränkt. Ebenso ist es z.B. auch möglich, bei nur einer Netzbuchse den Schutzleiterstift 3 über ein Blech 7 mit dem Gehäuse 10 zu verbinden.

### Bezugszeichenliste

- 1: Netzbuchse
- 2: Netzbuchse
- 3: Kontaktstift
- 4: Kontaktstift
- 5: Kontaktstift
- 6: Bereichsumschalter
- 7: Blech
- 8: Öffnung
- 9: Schraube
- 10: Gehäuse
- 11: Schraube
- 12: Öffnung
- 13: Nietverbindung
- 14: Schutzleiterdraht
- 15: Schraube
- 16: Zusatzlasche
- 17: Zahnscheibe

## Patentansprüche

1. Vorrichtung zur Reduzierung der Störstrahlung an einer Netzbuchse (1, 2) im Gehäuse (10) eines Computers oder ähnlichen elektrischen Gerätes, wobei neben der Netzbuchse ein Bereichsumschalter (6) angeordnet ist,
**dadurch gekennzeichnet, daß**
über den Bereichsumschalter (6) ein Blech (7) mit dem Gehäuse verbunden ist, welches den Schutzleiter (3) der Netzbuchse (1 oder 2) kontaktiert.

2. Vorrichtung zur Reduzierung der Störstrahlung an benachbarten Netzbuchsen (1, 2) im Gehäuse (10) eines Computers oder ähnlichen elektrischen Gerätes,
**dadurch gekennzeichnet, daß**
zwischen den Netzbuchsen (1, 2) ein Blech (7) mit dem Gehäuse (10) verbunden ist, welches die Schutzleiter (3) der beiden Netzbuchsen (1, 2) kontaktiert.

3. Vorrichtung nach Anspruch 1 oder 2,
**dadurch gekennzeichnet, daß**
das Blech (7) möglichst breit neben der Netzbuchse (1 oder 2) ausgeführt ist und sich erst kurz vor dem Schutzleiterkontakt (3) verjüngt.

4. Vorrichtung nach Anspruch 1,
**dadurch gekennzeichnet, daß**
das Blech in der Mitte für den Knebel des Bereichsumschalters (6) eine Öffnung (8) aufweist und seitlich des Bereichsumschalters (6) hochgebogen ist zur Kontaktierung des Schutzleiters, wiederum seitlich nach außen abgebogen ist.

5. Vorrichtung nach einem der Ansprüche 1 bis 4,
**dadurch gekennzeichnet, daß**
das Blech (7) mit dem Schutzleiterkontakt (3) verlötet ist.

6. Vorrichtung nach Anspruch 2,
**dadurch gekennzeichnet, daß**
die zwei Netzbuchsen (1, 2) jeweils so angeordnet sind, daß die Schutzleiterkontakte (3) zur Mitte weisen.

7. Vorrichtung nach Anspruch 6,
**dadurch gekennzeichnet, daß**
das Blech zur Kontaktierung der Schutzleiterkontaktstifte (3) mit Öffnungen (12) versehen ist, die an die Geometrie der Schutzleiterstifte angepaßt sind und diese nach der Kontaktierung umschließen.

8. Vorrichtung nach Anspruch 1 oder 2,
**dadurch gekennzeichnet, daß**
ein Schutzleiterstift (3) oder das Blech (7) über einen Schutzleiterdraht (14) mit dem Gehäuse (10) von außen unlösbar verbunden ist.

9. Vorrichtung nach Anspruch 1 oder 2,
**dadurch gekennzeichnet, daß**
das Blech (7) von außen unlösbar über eine Schraub- oder Nietverbindung (15) mit dem Gehäuse (10) leitend verbunden ist.

10. Vorrichtung nach Anspruch 10,
**dadurch gekennzeichnet, daß**
zwischen dem Blech (7) und dem Gehäuse (10) eine Zahnscheibe (17) angeordnet ist.
